# EUROPÄISCHE PATENTSCHRIFT

(11) **EP 1 934 082 B1**
(45) Veröffentlichungstag und Bekanntmachung des Hinweises auf die Patenterteilung: **21.03.2012**
(21) Anmeldenummer: 06775189.1
(22) Anmeldetag: 14.09.2006
(51) Int. Cl.: B62D 5/00, B62D 5/04

(54) **ÜBERLAGERUNGSLENKUNG MIT MECHANISCHER RÜCKFALLEBENE**
SUPERIMPOSED STEERING SYSTEM COMPRISING A MECHANICAL RETURN LEVEL
DIRECTION A SUPERPOSITION DOTEE D'UN PLAN DE RETOUR MECANIQUE

(30) Priorität: 06.10.2005 CH 16102005
(43) Veröffentlichungstag der Anmeldung: 25.06.2008
(73) Patentinhaber: ThyssenKrupp Presta Aktiengesellschaft, 9492 Eschen (LI)
(72) Erfinder: WAIBEL, Gerhard, A-6858 Bildstein (AT); ALLGÄUER, Rene, A-6844 Altach (AT)
(74) Vertreter: Wegmann, Urs
(86) Internationale Anmeldenummer: PCT/CH2006/000496
(87) Internationale Veröffentlichungsnummer: WO 2007/038884

(56) Entgegenhaltungen:
- DE-A1- 19 906 703
- DE-U1-202004 015 552

## Beschreibung

Die Erfindung bezieht sich auf eine Drehzahlüberlagerungseinrichtung nach dem Oberbegriff des Anspruchs 1.

Derartige Kraftfahrzeuglenkungen mit Überlagerungsgetriebe werden bei modernen Lenksystemen für nicht spurgebundene Kraftfahrzeuge verwendet. Der elektromagnetische Hilfsantrieb, der bei derartigen Überlagerungsgetrieben vorgesehen ist, dient dazu, die durch den Hilfsantrieb hervorgerufenen Drehungen des Überlagerungsgetriebes den durch die Bedienperson am Steuerrad (Lenkrad) vorgenommenen Steuereingriffen zu überlagern. Auf diese Weise wird die Relation der Verdrehgeschwindigkeit der Fahrzeugräder im Vergleich zur Verdrehgeschwindigkeit des Steuerrades einstellbar und kann der jeweiligen Fahrsituation angepasst werden. So sollen beispielsweise beim Einparken bereits geringe Winkeländerungen am Steuerrad zu großen Winkelverschwenkungen an den Rädern führen, während bei schneller Autobahnfahrt selbst größere Winkeländerungen am Steuerrad nur zu geringen Winkelverschwenkungen an den Rädern führen sollen. Unter Umständen soll sogar ein automatisiertes Einparken ohne Verdrehung des Steuerrades ermöglicht werden. Gleichzeitig kann auf diese Weise über den Hilfsantrieb z.B. korrigierend auf fehlerhafte oder zu heftige Lenkbewegungen des Fahrzeugführers eingewirkt werden. Solche korrekturbedürftigen Lenkbewegungen können beispielsweise bei Überreaktionen des Fahrers in Gefahrsituationen auftreten.

Die Funktion einer Drehzahlüberlagerung, die auch als Drehwinkelüberlagerung bezeichnet werden kann, beim Lenkvorgang ist somit gegenüber einer Krafteinkopplung bzw. Drehmomenteneinkopplung, wie sie bei einer Servolenkung zur Erleichterung des Steuervorgangs dient, entkoppelt.

Im Stand der Technik sind bereits verschiedene derartige Einrichtungen bekannt geworden. Neben der Anwendung von Planetengetrieben zur Überlagerung der Drehwinkel bzw. der Drehzahl werden auch Spannungswellengetriebe, die auch unter dem Begriff Harmonic-Drive-Getriebe oder Pulsatorengetriebe bekannt sind, verwendet.

Bei derartigen Getrieben zur Überlagerung der Drehwinkel bzw. Drehzahl sind die Antriebswelle und die Abtriebswelle sowie eine Ausgangswelle eines Hilfsantriebes jeweils mit einem Getriebeglied des Überlagerungsgetriebes verbunden. Derartige Getriebeglieder sind beispielsweise jeweils ein Zahnrad oder ein Planetenträger. Die Überlagerung erfolgt durch jeweils spezifische Getriebestrukturen, teilweise aus weiteren Getriebeelementen bestehend, indem sich die Drehzahlen der Ausgangswelle des Hilfsantriebes und der Antriebswelle mit entsprechend vorbestimmten Drehzahlübersetzungen addieren und auf die Abtriebswelle der Einrichtung übertragen werden. Neben den Drehzahlen werden entsprechend auch Drehmomente übertragen. Eine entsprechende Abstützung der Momente am Hilfsantrieb, und an der Antriebs- und Abtriebswelle ist daher erforderlich, da andernfalls die Drehzahl der Antriebswelle nicht wie gewünscht auf die Abtriebswelle sondern auf die Ausgangswelle des Hilfsantriebes übertragen wird. Im Falle einer Drehzahlüberlagerungseinrichtung für ein Kraftfahrzeug hätte das zur Folge, dass der Fahrer den Lenkeinschlag nicht mehr sicher bestimmen kann. Der Verriegelungseinrichtung zur wahlweisen drehfesten Kopplung zwischen Antriebswelle und Abtriebswelle kommt eine entsprechend hohe Bedeutung zu.

In der EP1338493A1 und der JP2003306155A werden eine Einrichtung zur Drehzahlüberlagerung für ein Lenksystem vorgestellt, bei denen mit einem Spannungswellengetriebe die Drehzahlüberlagerung erfolgt. Dabei ist die Einrichtung mit der vom Steuerrad angetriebenen Lenkwelle integral und drehbar ausgebildet und enthält einen Antriebsmotor, dessen Antriebsdrehzahl zwecks Erreichung der gewünschten Drehzahlüberlagerung einstellbar ist. Bei der vorgestellten Lösung ist das Gehäuse mit der Lenkwelle verbunden und dreht somit mit. Zur mechanischen Zwangskopplung der Eingangsmit der Ausgangswelle der Überlagerungseinrichtung im Fehlerfall, etwa bei Stromausfall, wird ein Formschluss analog einer Kupplungsverzahnung vorgeschlagen, die durch eine Axialbewegung der gegenüberliegenden Kupplungsseiten mit Federkraft eingekoppelt ist. Die Kupplung wird durch die am Getriebe angreifenden Momente von der mit dem Steuerrad verbundenen Antriebswelle bzw. der mit den Rädern verbundenen Abtriebswelle gesteuert.

Ein wichtiger Nachteil dieser Lösung besteht darin, dass der Fahrer die gesamte Einrichtung, einschliesslich der Sicherheitskupplung, beim Steuern des Fahrzeuges mit dem Steuerrad drehen muss.

Weiter wird in der DE19823031A1 eine Drehzahlüberlagerungseinrichtung mit einer Sicherheitskupplung für die sichere Drehmomentenübertragung im Fehlerfall vorgestellt. In den verschiedenen Ausführungsbeispielen wird ein Stift durch einen Solenoid im Fehlerfall parallel zur Achse der Antriebs- bzw. Abtriebswelle bewegt und das Getriebe blokkiert. In einem Ausführungsbeispiel sind eine Reihe von Zapfenlöchern zur Aufnahme des.Stiftes in einem geeigneten Getriebeglied vorgesehen. In einem weiteren Ausführungsbeispiel, bei dem die Überlagerung mit einem Harmonic-Drive-Getriebe realisiert ist, wird der Stift zwischen dem elliptischen Rotor und Teilen des Gehäuses oder alternativ zwischen die Verzahnungen des Getriebes in Eingriff gebracht.

Zum Betreiben derartiger Einrichtungen ist es sinnvoll oder sogar notwendig, die Sicherheitskupplung beim Start des Fahrzeuges zunächst im eingekoppelten Zustand zu halten, da in der Regel nicht sichergestellt sein kann, dass sofort ausreichend Energie zum Betreiben der Drehzahlüberlagerungseinrichtung zur Verfügung steht.

In der gattungsbildenden Offenlegungsschrift DE 199 06 703 A1 wird eine Drehzahlüberlagerungseinrichtung beschrieben mit einem Elektromorantrieb für das Überlagerungsgetriebe und einer integrierten elektromagnetischen Bremse, welche im Falle eines Defektes eine mechanische Verbindung zwischen der Lenkwelle und dem Lenkgetriebe herstellt. Hierbei ist der Elektromagnet der elektromagnetischen Bremse am Motorgehäuse festgelegt und über Luftspalte wirkt ein drehbewegliches Jochteil auf einen Anker, der mit der Rotorwelle des Motors verbunden ist und in angezogenem Zustand die Rotorwelle mit der Ausgangswelle verbindet.

Eine weitere Drehzahlüberlagerungseinrichtung mit einem Elektromorantrieb für ein Überlagerungsgetriebe und einer integrierten elektromagnetischen Bremse ist aus der Gebrauchsmusterschrift DE 20 2004 015 552 U1 bekannt geworden. Die Bremse kann die Motorwelle des Antriebsmotors festhalten und ist innerhalb der Anordnung zwischen einer Motorstirnseite und dem Getriebe angeordnet. Die Anordnung mit Motor, Getriebe und Bremse ist innerhalb eines einzelnen Gehäuse untergebracht.

In der Offenlegungsschrift W02006/072186 A1 desselben Anmelders, die eine nachveröffentlichte Schrift ist, wird eine Drehzahlüberlagerungseinrichtung beschrieben, die einen Elektromotorantrieb und ein Überlagerungsgetriebe aufweist, wobei eine Verriegelungsvorrichtung vorgesehen ist, die im Fehlerfall den Rotor des Elektromotors mit dem Stator und / oder der karosseriefesten Trägeranordnung drehfest verriegelt. Das Überlagerungsgetriebe ist hierbei als Stirnrad-Getriebe ausgebildet.

In einer weiteren Offenlegungsschrift WO2006/0398825 A1 desselben Anmelders, die ebenfalls eine nachveröffentlichte Schrift ist, wird eine Drehzahlüberlagerungseinrichtung beschrieben, die einen Elektromotorantrieb und ein Überlagerungsgetriebe aufweist, wobei eine Verriegelungsvorrichtung vorgesehen ist, die im Fehlerfall den Rotor des Elektromotors mit dem Stator und / oder der karosseriefesten Trägeranordnung drehfest verriegelt. Das Überlagerungsgetriebe ist hierbei als Harmonic-Drive-Getriebe ausgebildet.

Die im Stand der Technik gezeigten Lösungen bergen jedoch eine Reihe von Nachteilen. Die Blockierelemente der Sicherheitskupplung müssen den allfällig sich drehenden Rotor des Elektromotors schlagartig abbremsen und dabei erhebliche Kräfte übertragen, so das ein häufiges Ein- und Auskuppeln der Kupplung zu Verschleiss führt oder die Kupplung aufwändig und mit grossem Bauraumbedarf ausgelegt sein muss. Weiter sind die Steifigkeiten in der Drehmomentenübertragung nicht sehr hoch. Zudem ist ein Einkuppeln nicht in jeder Winkelposition möglich.

Es ist die Aufgabe der Erfindung, eine Drehzahlüberlagerungslenkung für ein Lenksystem mit einer Sicherheitskupp-lung bereitzustellen, die kompakt ist und geringen Verschleiss aufweist und in jeder Winkelposition ein- und ausgekuppelt werden kann.

Gelöst wird die Aufgabe durch die Vorrichtung entsprechend den Merkmalen des Anspruchs 1. Die abhängigen Ansprüche definieren weitere bevorzugte Ausführungsformen.

Die Erfindung wird nun nachfolgend beispielsweise und mit schematischen Figuren näher erläutert. Es zeigen:
- Fig. 1: ein Lenksystem für ein Kraftfahrzeug,
- Fig. 2: eine Ausführungsform der Drehzahlüberlagerungseinrichtung mit in perspektivischer Darstellung,
- Fig. 3: eine weitere Ausführungsform der Drehzahlüberlagerungseinrichtung im Axialschnitt,
- Fig. 4: eine weitere Ausführungsform der Drehzahlüberlagerungseinrichtung im Axialschnitt,
- Fig. 5: einen Querschnitt entlang der Schnittachse X-X, entsprechend der Ausführungsform gemäss Figur 4, die erfindungsgemäβe Ausführungsform Drehzahlüberlage-
- Fig. 6: der rungseinrichtung im Axialschnitt,
- Fig. 7: eine Detailansicht durch die Verriegelungseinrichtung entsprechend dem Ausschnitt Y aus der Figur 3.
- Fig. 8: schematisch einen anderen Aufbau der Sicherheitskupplung.
- Fig. 9: und Fig. 10 zeigen zwei Ausführungsformen für die Kontaktscheibe.

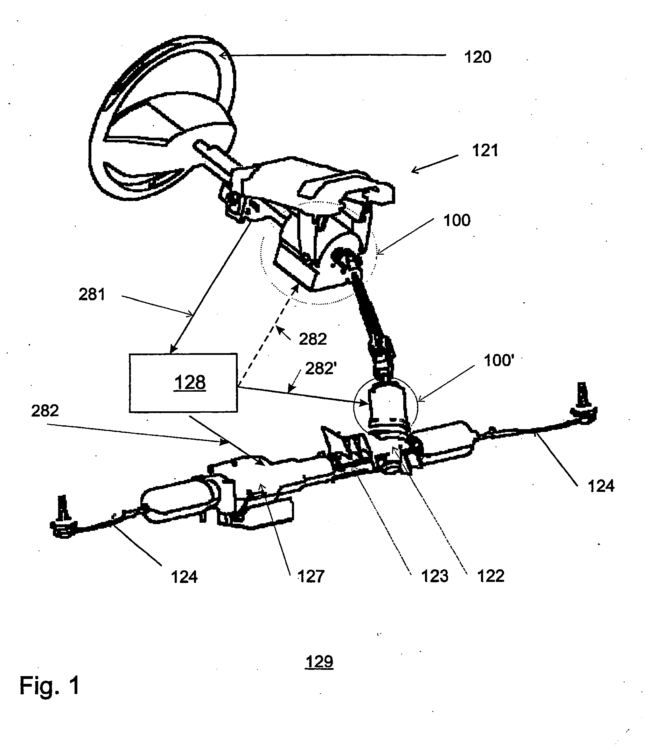

Der in Fig. 1 gezeigte schematische Aufbau einer Lenkvorrichtung 129 als Steer-by-wire-Anordnung bzw. einer Lenkvorrichtung 129 mit elektrischer Hilfskraftunterstützung entspricht im Wesentlichen dem Stand der Technik. Die dargestellte Lenkvorrichtung umfasst u.a. ein Steuerrad 120, eine Lenksäule 121, ein Lenkgetriebe 122 und die beiden Spurstangen 124. Die Spurstangen 124 werden durch die Zahnstange 123 angetrieben. Zur Drehzahlübersetzung dient das erfindungsgemäße Überlagerungsgetriebe 100 oder 100', je nachdem, an welcher Stelle der Übertragungskette vom Steuerrad zu den Spurstangen das Überlagerungsgetriebe angeordnet werden soll. Es ist auch möglich, das erfindungsgemäße Überlagerungsgetriebe in das Lenkgetriebe 122 zu integrieren. Diese Anordnung des Überlagerungsgetriebes ist in Fig. 1 nicht dargestellt.

Im Folgenden wird die Erfindung anhand einer Lenkung mit einem Überlagerungsgetriebe näher erläutert, welches an dem in Fig. 1 mit dem Bezugszeichen 100 bezeichneten Ort angeordnet werden soll. Vorzugsweise ist das im Folgenden beschriebene Überlagerungsgetriebe daher zwischen dem Steuerrad 120 und dem Lenkgetriebe 122, beispielsweise an der in Fig. 1 mit dem Bezugszeichen 100 gekennzeichneten Stelle angeordnet.

In dieser bevorzugten Anordnung des Überlagerungsgetriebes sind die vom Steuerrad 120 getriebene Antriebswelle 2 und die das Lenkritzel des Lenkgetriebes 122 treibende Abtriebswelle 1 koaxial zueinander angeordnet, wobei das Ende 2a der Antriebswelle 2 und das Ende la der Abtriebswelle 1 in einem Abstand zueinander gegenüberliegend auf ihrer gemeinsamen Rotationsachse angeordnet sind.

Im Normalfall wird die vom Fahrer gewünschte Lenkbewegung durch das Steuerrad 120 über eine in Fig. 1 nicht gezeigte Sensorik als Signal 281 in ein Steuergerät 128 eingespeist. Im Steuergerät 128 wird daraus, ggf. unter Zuhilfenahme eines Sensorsignals des Hilfsantriebs des Lenksystems (hier nicht dargestellt) und/oder des Überlagerungsgetriebes und weiterer den Fahrzeugzustand beschreibender Signale, die entsprechende Steuerspannung 282 für den Elektromotor des Überlagerungsgetriebes bestimmt und an diesen ausgegeben.

Bei der Erfindung kann das Lenksystem, in das das Überlagerungsgetriebe eingebaut wird, mit oder ohne Lenkhilfskraftunterstützung ausgelegt sein. Ist eine Lenkhilfskraftunterstützung vorgesehen, so ist es unerheblich, ob diese hydraulisch, pneumatisch oder elektrisch erfolgt.

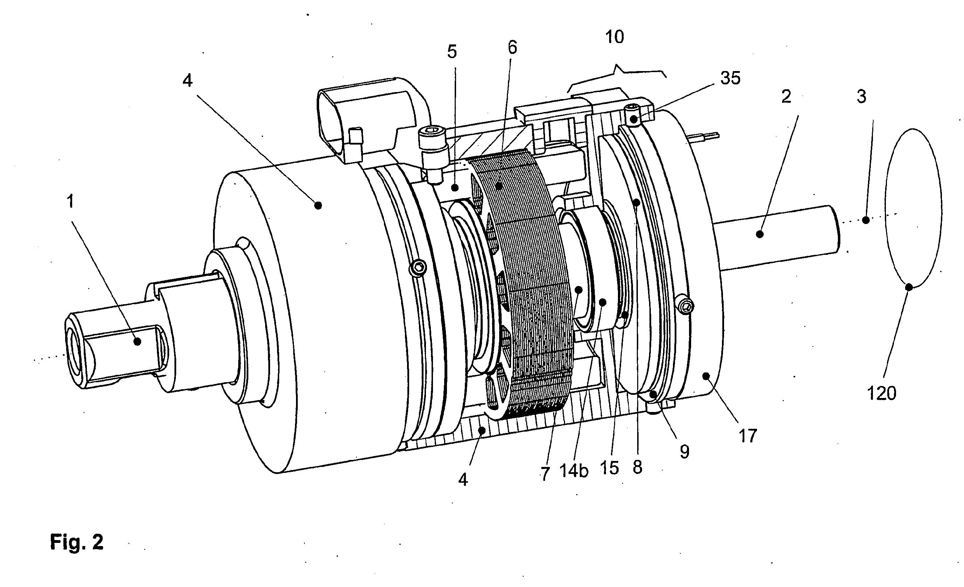

Die Figur 1 zeigt eine entsprechende Drehzahlüberlagerungseinrichtung. In den Figuren 2 bis 7 sind Ausführungsformen für verschiedenen Getriebestrukturen des Überlagerungsgetriebes gezeigt. Die Nummerierungen der Bezugszeichen sind für gleiche Elemente in allen Figuren gleich, auch wenn die einzelnen Ausführungen unterschiedlich sein können.

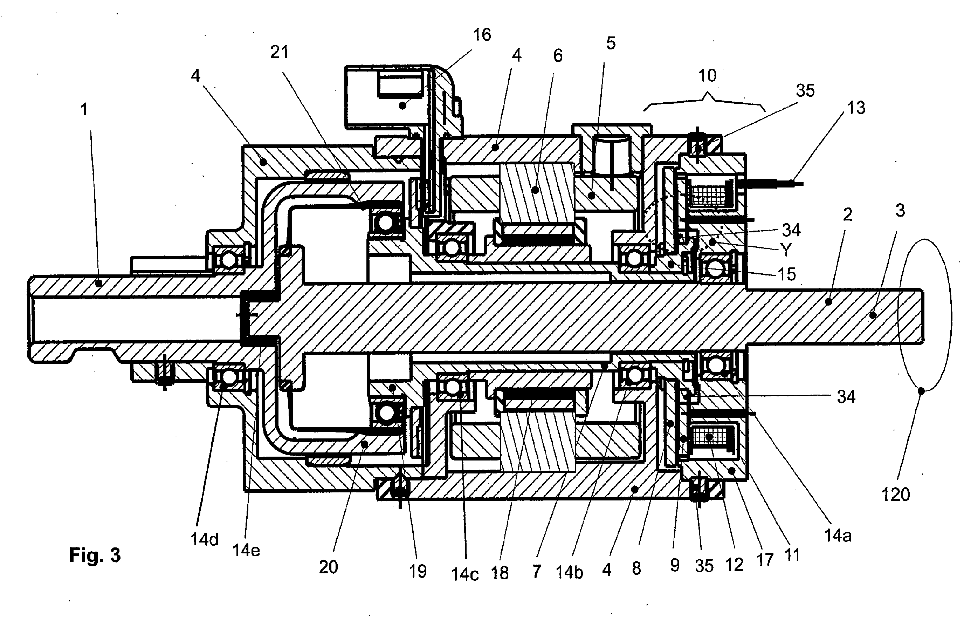

In der Drehzahlüberlagerungseinrichtung für ein Fahrzeuglenksystem mit einer Abtriebswelle 1, die zur Antriebswelle 2 in deren Achsrichtung ausgerichtet ist, einer Trägeranordnung 4, welche die Abtriebswelle 1 und die Antriebswelle 2 mindestens teilweise gelagert drehbar positioniert, einem Hilfsantrieb 5, 6, 7 mit einem Rotor 7, der mit einem ersten Getriebeelement 19, 25, 27 drehfest verbunden ist und eine einstellbare Verriegelungseinrichtung 10, die eine Sicherheitskupplung bildet, zur wahlweisen drehfesten Kopplung zwischen Abtriebswelle 1 und Antriebswelle ist 2 vorgesehen, dass die Trägeranordnung 4 drehfest zur Karosserie angeordnet ist, der Rotor des Hilfsantriebes 5, 6, 7 koaxial die Abtriebswelle 1 und/oder Antriebswelle 2 umschliesst, das erste Getriebeelement 19, 25, 27 mit einer Drehzahlübersetzung kleiner 1 die Drehzahl des Rotors 7 auf die Drehzahl der Abtriebswelle 1 überträgt, und der Rotor mit einem konzentrisch die Achsrichtung der Abtriebswelle 1 und Antriebswelle 2 umschliessenden ferromagnetischen oder permanentmagnetischen ersten Kontaktelement 8, drehfest verbunden ist, wobei die drehfeste Kopplung zwischen Abtriebswelle 1 und Antriebswelle 2 durch einen Reibschluss des ersten Kontaktelementes 8 mit einem zweiten Kontaktelement 9, das drehfest mit der Trägeranordnung 4 verbunden ist, erzielt ist und die für die Reibkraft erforderliche Anpresskraft durch eine magnetische Kraft erzeugt ist und wobei zumindest eines der beiden Kontaktelemente 8, 9 in Achsrichtung verschieblich ist. Eines und/oder beide Kontaktelemente können mit Vorteil alternativ in allen Ausführungsformen Scheiben und /oder Elemente mit Flächenabschnitten sein, die mit korrespondierenden konischen oder gewölbten Oberflächen ausgebildet sind. Dadurch wird die Kontaktfläche bei gleichem Durchmesser erhöht und es kann auch eine Zentrierfunktion erzielt werden. Im Detail ist die Sicherheitskupplung 10 im Querschnitt in den Figuren 3, 4, 6 und 7 dargestellt.

Die Antriebswelle 2 und Abtriebswelle 1 liegen in einer Achse 3 zueinander ausgerichtet. In der gezeigten Ausführungsform ist auf dem Rotor 7 des Hilfsantriebes 5, 6, 7 ein Kopplungselement 15 angeordnet, dass die erste Kontaktscheibe 8 axial verschiebbar trägt und das Drehmoment überträgt. Der koaxial die Antriebswelle 2 umschliessende Rotor 7 des Hilfsantriebes wird in einem Wälzlager 14b in der Trägeranordnung 4, die hier als Gehäuse ausgebildet ist, drehbar gelagert. Die Elemente der Verriegelungseinrichtung 10 bzw. der Sicherheitskupplung können in einem separaten Teilgehäuse 17 als Baugruppe gefasst sein, die separat hergestellt wird und mechanisch mit der Trägeranordnung 4 verbunden wird. Diese Verbindung kann dabei einfach über eine Verschraubung in ein hier nicht dargestelltes Innengewinde der Trägeranordnung 4 oder über Verschraubungen 35 hergestellt sein. Alternativ kann diese Verbindung auch über Einpressen, Einkleben oder anders hergestellt werden.

Im bevorzugten Fall ist der Hilfsantrieb 5, 6, 7 als Elektromotor ausgelegt, dessen Stator 6 fest mit der Trägeranordnung 4 verbunden ist. Je nach Ausführung des Getriebes umschliesst der Stator 6 die Achse 3 der Antriebswelle 2 und/oder Abtriebswelle 1 koaxial. Der Stator 6 trägt die Statorwindungen 5. Der Rotor des Elektromotors ist mit Permanentmagneten bestückt und wird bei entsprechender Bestromung der Statorwindungen 5 in Drehung versetzt. Der Elektromotor ist entsprechend vollständig in die Drehzahlüberlagerungseinrichtung integriert, wodurch eine sehr kompakte und energieeffiziente Auslegung erreicht ist. Der Motor ist so auszulegen, dass er in beide Drehrichtungen drehend angesteuert werden kann. Durch die Verbindung des Rotors mit einem Getriebeglied des Überlagerungsgetriebes, dessen Drehzahl mit einer Drehzahlübersetzung, die kleiner als 1 ist, auf die Abtriebswelle 1 übertragen wird, kann der Elektromotor mit höherer Drehzahl angesteuert werden. Übersetzungsverhältnisse von mehr als 1:20 oder gar mehr als 1:50 sind dabei besonders vorteilhaft. Das heisst mehr als 20 bzw. 50 Rotorumdrehung entsprechen 1 Umdrehung der Abtriebswelle, wenn die Drehzahl der Antriebswelle den Wert 0 hat.

Die Kontaktscheiben 8, 9 sind bevorzugt als kreisrunde Scheiben aus Stahl oder einem anderen ferromagnetischem Werkstoff hergestellt. Es können aber auch unterbrochene bzw. gelochte Scheiben sein, was beispielsweise einer besseren Entlüftung beim Öffnen und Schliessen der beiden Kontaktscheiben dient. Im Ausführungsbeispiel ist die erste Kontaktscheibe 8 über ein Kopplungselement 15 mit dem Rotor 7 der Hilfskrafteinrichtung 5, 6, 7 drehfest aber axial verschieblich verbunden.

Die magnetische Anpresskraft wird im einfachsten Fall durch einen Permanentmagnet 11 erzeugt. Dabei kann der Permanentmagnet 11 als zylindrische Scheibe, deren Achse mit der Achse 3 der Antriebswelle 2 bzw. Abtriebswelle 1 zusammenfällt, ausgebildet sein. Es können aber auch mehrere einzelne Permanentmagnete auf eine zylindrische Scheibe aufgebracht sein. Im weiteren wird jede mögliche Ausführungsform der Einfachheit halber mit dem Permanentmagneten 11 bezeichnet.

Die erste Kontaktscheibe 8 ist durch das Magnetfeld eines Permanentmagneten 11 an die zweite Kontaktscheibe 9 herangezogen. Das Teilgehäuse 17 sowie eine entsprechende Ankerausbildung sorgen für den magnetischen Schluss. Die Flächenpressung zwischen den beiden Kontaktscheiben 8, 9 dient als Reibschluss. Zur Verbesserung der Reibkraft können eine oder beide der Kontaktscheiben 8, 9 mit entsprechenden Reibbelägen beschichtet sein. Eine formschlüssige Oberflächenstruktur der beiden Kontaktscheiben 8, 9 wäre zwar naheliegend und denkbar, birgt aber eine Reihe von Nachteilen mit sich. Insbesondere ist dann eine Verriegelung nicht mehr für jeden Relativdrehwinkel zwischen den beiden Kontaktscheiben 8, 9 möglich. Auch ist von erhöhtem Verschleiss auszugehen. Insbesondere ist ein Abbremsen einer allfällig noch bestehenden Drehung des Rotors 7 kaum möglich. Dennoch kann eine derartige Lösung im Einzelfall wünschenswert sein.

Im Fall der Verriegelung sind die Kontaktscheiben 8, 9 miteinander in Reibkontakt, wodurch der Rotor 7 gegenüber der Trägerstruktur 4 blockiert ist. Der Rotor 7 ist weiter mit einem ersten Getriebeelement 19, 25, 27 verbunden, das damit ebenfalls gegenüber der karosseriefesten Trägerstruktur 4 blockiert ist. Somit wird das gesamte Drehmoment, dass in die Antriebswelle 2 eingeleitet wird, auf die Abtriebswelle 1 übertragen. Entsprechend den Getriebeübersetzungen des jeweiligen Getriebes wird dabei die Drehzahl der Antriebswelle auf eine Drehzahl an der Abtriebswelle übertragen. Damit ist die Funktion der drehfesten Kopplung zwischen Antriebswelle 2 und Abtriebswelle 1 erzielt. Dieser Fall ist für den Notfall oder auch bei ausgeschaltetem Antriebsmotor des Kraftfahrzeuges wichtig. In diesem Betriebszustand hat der Fahrer die alleinige Kontrolle über die Steuerung der Fahrtrichtung und das Steuerrad ist mit den verschwenkten Rädern mechanisch gekoppelt. Das ist wichtig, in Fällen mangelnder Energieversorgung des Hilfsantriebes, wie etwa bei Stromausfall, beim Ausfall eines Sensors oder auch bei Fehlfunktion der Ansteuerung des Hilfsantriebes. Zur Detektion derartiger Fehlfunktionen können beispielsweise Sensoren 16 in die Drehzahlüberlagerungseinrichtung integriert sein, die eine Überwachung der verschiedenen Drehzahlen bzw. Drehwinkeln an Antriebswelle 2, Abtriebswelle 1 und Rotor 7 ermöglicht.

Im Fall der Entriegelung, bei dem die Drehzahlen bzw. Drehwinkel Antriebswelle 2 und Abtriebswelle 1 zueinander veränderbar sein sollen, werden die Kontaktscheiben 8, 9, bevorzugt durch einen kleinen Abstand zueinander, ausser Reibkontakt gebracht. Gleichzeitig wird der Hilfsantrieb mit Energie versorgt, so dass er die Abstützung des von der Antriebswelle 2 eingeleiteten Drehmoments übernimmt. Bedarfsweise wird der Rotor 7 durch den Hilfsantrieb in Drehung versetzt, um die Entsprechende Drehzahl- bzw. Drehwinkelüberlagerung zwischen Antriebswelle 2 und Abtriebswelle 1 zu erreichen.

Es ist besonders vorteilhaft zur Erhöhung der Sicherheit, wenn im Fall der Entriegelung bei bei Ausfall der Energieversorgung am Hilfsantrieb 5, 6, 7 die Umschaltung in den Fall der Verriegelung, bei dem Abtriebswelle 1 und Antriebswelle 2 drehfeste gekoppelt sind, quasi automatisch erfolgt. Zusätzliche Ströme, die die Kopplung bewirken, sollen nicht erforderlich sein. Dieser Vorgang soll zudem für den Fahrer möglichst unmerklich erfolgen.

Dazu soll bevorzugt die Entriegelung durch einen Stromfluss bewirkt werden, während ohne diesen Stromfluss sich das System automatisch verriegelt. In einer Weiterführung der Erfindung wird das dadurch erreicht, dass die magnetische Anpresskraft zwischen der ersten und zweiten Kontaktscheibe durch ein elektrisch angesteuertes Gegenmagnetfeld aufhebbar ist. Im einfachsten Fall wird dieses Gegenmagnetfeld durch eine umlaufende Spule 12, die über einen elektrischen Anschluss 13 angesteuert wird, erzeugt. Die Spule 12 ist im Ausführungsbeispiel zwischen dem Permanentmagneten 11, die die magnetische Anpresskraft bewirken und der Kontaktscheibe 9 angeordnet. Ist die Spule 12 entsprechend bestromt, schliesst sich der magnetische Kreis zwischen dem Permanentmagneten 11, so dass auf die erste Kontaktscheibe 8 keine oder nur eine sehr geringe Anziehungskraft in Richtung der zweiten Kontaktscheibe 9 wirkt. Damit sinkt die Reibkraft zwischen den beiden Kontaktscheiben, so dass die Verriegelungseinrichtung 10 entriegelt ist. Bei Ausfall der Stromversorgung der Spule 12 bricht das Gegenmagnetfeld unmittelbar zusammen, so dass die Magnetkraft des Permanentmagneten 11 direkt auf die Kontaktscheibe 8 wirkt und diese an die Kontaktscheibe 9 heranzieht.

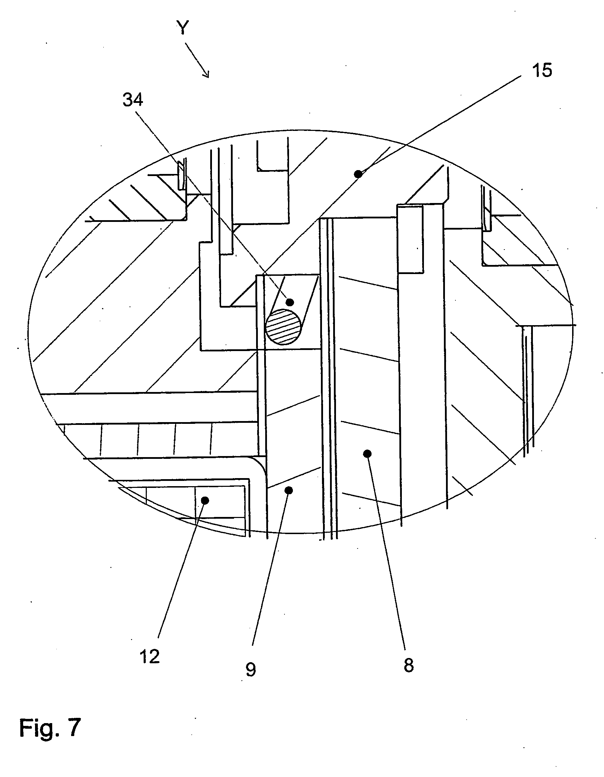

In einer Weiterführung soll der Energieaufwand zum Halten des entriegelten Zustands der Verriegelungseinrichtung 10 gesenkt wird. Dazu umfasst die Verriegelungseinrichtung eine Feder 34 umfasst, deren Kraft entgegen der magnetischen Anpresskraft wirkt. Im Ausführungsbeispiel wird die axial verschiebliche Kontaktscheibe 8 mittels einer Feder 34 vom Permanentmagneten 11 weggedrückt, wie dies schematisch in der detaillierten Figur 7 dargestellt ist. Mit steigendem Abstand der Kontaktscheibe vom Feld des Permanentmagneten 11 sinkt die Anziehungskraft, so dass das Gegenmagnetfeld nur noch schwächer zu sein braucht, um dessen Wirkung aufzuheben.

Die Federkraft muss jedoch zur Verriegelung der Verriegelungseinrichtung 10 durch die magnetische Kraft des Permanentmagneten 11 überwunden werden. Dazu wird in einer Weiterführung der Erfindung die Federkraft definiert ausgelegt. Im bevorzugten Fall ist die Federkraft so bemessen, dass die auf die erste axial bewegliche Kontaktscheibe 8 von der anderen Kontaktscheibe 9 weg gerichtet wirkende Kraft im von der ersten Kontaktscheibe abgehobenen Zustand im Bereich von etwas grösser als Null bis 10% des Betrages der magnetischen Kraft des Magnetfeldes, das die Anpresskraft erzeugt, liegt. Dadurch ist zum Erhalt des entriegelten Zustandes der Verriegelungseinrichtung 10 nur ein sehr geringer Leistungsbedarf für das Gegenmagnetfeld vorhanden. Gleichzeitig ist das sichere Schliessen der Verriegelungseinrichtung gewährleistet. Sobald sich die Kontaktscheiben 8, 9 aufeinander zu bewegen steigt die magnetische Kraft auf die bewegliche Kontaktscheibe 8, so dass die benötigte hohe Reibkraft erzeugt wird. Mit der Dimensionierung der Feder wird gleichzeitig das Prellen beim Zusammenschlagen der beiden Kontaktscheiben vermindert. Der kurzzeitig geringfügig höhere Leistungsbedarf zum Entriegeln der Verriegelungseinrichtung 10 wird durch die Einsparung während der gesamten Dauer des Haltens im entriegelten Zustand mehr als kompensiert.

Die Verriegelungseinrichtung 10 kann sehr gut und kompakt in die Drehzahlüberlagerungseinrichtung integriert werden. Dazu wird bevorzugt der Rotor 7 einerseits direkt in der Trägeranordnung 4 drehbar gelagert und die Antriebswelle 2 in dem fest mit der Trägeranordnung verbundenen Teil der Verriegelungseinrichtung 10, das die zweite Kontaktscheibe umfasst, drehbar gelagert. Besonders vorteilhaft ist das andere Ende der Antriebswelle 2 in direkt in der Abtriebswelle 1 gelagert.

Mit Hilfe der nach den oben genannten Merkmalen aufgebauten Drehzahlüberlagerungseinrichtung ist eine Sicherheitsredundanz für die Lenkung gegen Ausfall der Bordnetzspannung oder andere Störungen gegeben, die sehr schnell und sicher eine mechanische Kopplung zwischen dem Steuerrad und den gelenkten Rädern herstellt. Im Falle eines Ausfalls der Energieversorgung des Hilfsantriebes 5, 6, 7, eines Sensorsignals oder einer Fehlfunktion in der Steuerung oder einer anderen Störung der Funktionen des Fahrzeuges wird der Stromfluss zum Betreiben des Gegenmagnetfeldes zum Aufheben der magnetischen Anpresskraft unterbrochen, so dass die erste Kontaktscheibe 8 mit der zweiten Kontaktscheibe 9 mit der magnetisch erzeugten Anpresskraft in reibschlüssigen Kontakt stehen.

Anhand der Figuren 3, 4, 5 und 6 wird die Anwendung für verschiedene Arten von bevorzugten Überlagerungsgetrieben zur Darstellung der Drehzahlüberlagerungseinrichtung für ein Fahrzeuglenksystem näher erläutert, welche mit einer Verriegelungseinrichtung 10 gekoppelt sind.

In Fig. 3 ist eine bevorzugte Drehzahlüberlagerungseinrichtung zusammen mit der Verriegelungseinrichtung 10 im Längsschnitt dargestellt. Eine Antriebswelle 2 und Abtriebswelle 1 sind in Achsrichtung gegeneinander ausgerichtet und drehbar unabhängig voneinander drehbeweglich gelagert. Die Antriebswelle 2 ist in einem Lenksystem mit einem Lenkrad 120 wirkverbunden. Die Trägeranordnung 4 nimmt die Lager 14a, 14d und 14b auf für die drehbare Lagerung der Antriebswelle 2 und der Abtriebswelle 1. Diese Wellen 1, 2 können vollständig an der Trägeranordnung gelagert werden oder aber auch zusätzlich ausserhalb der Trägeranordnung 4. Die Trägeranordnung 4 ist verdrehfest gegenüber dem Chassis am Fahrzeug angeordnet und dreht mit keiner der beiden Wellen 1,2 mit. Die Trägeranordnung 4 ist, vorteilhafterweise als ein im wesentlichen geschlossenes Gehäuse 4 ausgebildet. Koaxial um die Antriebswelle 1 ist, gegenüber dem Gehäuse 4, ein Rotor 7 drehbar mit einem Lager 14b, 14c gelagert angeordnet, welcher durch den stationär angeordneten umfassenden Stator 6 getrieben wird und zusammen einen Elektromotor bildet. Bevorzugterweise ist dieser Motor als elektronisch kommutierter Motor ausgebildet. Dieser Hilfsantrieb 5, 6, 7 kann aber auch anderer Art sein, wie beispielsweise ein hydraulischer Motor. Am Rotor 7 ist ein Wave-Generator 19, der ein erstes Getriebeelement bildet, angeordnet, der beispielsweise aus einer ovalen Scheibe besteht, auf dessen Umfang direkt oder indirekt ein aussenverzahnter flexibler Ring 21 gelagert ist. Weiterhin ist am Rotor das erste Kontaktelement 8 der Verriegelungseinrichtung 10, hier wieder als Kontaktscheibe 8 ausgebildet, drehfest angeordnet. Zusammen mit dem dritten Gehäuseteil 17 ist der Anschluss an die Verriegelungseinrichtung 10 dargestellt, dessen Aufbau und Funktion bereits zuvor beschrieben worden ist.

Die Aussenverzahnung des flexiblen Rings 21 greift zum mindesten an zwei gegenüberliegenden Umfangspunkten in ein Innenzahnrad 20 ein. Dieses Innenzahnrad 20 ist mit der Abtriebswelle 1 drehfest verbunden, wobei die Antriebswelle 2 mit dem aussenverzahnten flexiblen Ring 21 drehfest verbunden ist.

Die vorliegende Ausbildung der Drehzahlüberlagerungseinrichtung bewirkt, dass wenn der Hilfsantrieb 5, 6, 7 nicht betrieben wird, keine Drehzahlüberlagerung auf die Abtriebswelle 1 statt findet und die Antriebswelle 2 mit der Abtriebswelle 1 über die Getriebeanordnung 1:1 gekoppelt ist. In diesem Fall überträgt sich somit die Drehbewegung des Lenkrades 120 bzw. der Antriebswelle 2 direkt über die Verdrehung des mit der Antriebswelle drehfest verbundenen flexiblen Rings 21 und den Zahneingriffen zwischen diesem flexiblen Ring 21 und dem innenverzahnten Innenzahnrad 20, das mit der Abtriebswelle 1 drehfest verbunden ist, ohne Drehzahlveränderung auf die Abtriebswelle 1 und somit auf das Lenkgetriebe 122. Wird der Hilfsantrieb 6, 7 in Bewegung gesetzt, entsprechend den Signalen der Ansteuerungselektronik des Steuergerätes 128, wird der Rotor 7 in Bewegung versetzt und dessen Drehzahl, entsprechend untersetzt, über das eingangs beschriebene Harmonic-Drive-Getriebe auf die Abtriebswelle 1 überlagert. Das Drehzahlverhalten der Lenkeinrichtung kann somit über die vorliegende Drehzahlüberlagerungseinrichtung wunschgemäss der Fahrsituation und den Fahrbedürfnissen mit Hilfe der Steuerungsvorrichtung 128 eingestellt und nachgeführt werden.

In einer Weiterbildung ist der flexible Ring 21 topfförmig ausgebildet und direkt mit seiner Bodenfläche mit der Antriebswelle 2 bzw. in einer alternativen Ausführungsform mit der Abtriebswelle 1 drehfest verbunden, bevorzugt sogar durch eine einfache Verstemmung oder Nietverbindung oder durch eine Schweissverbindung des so gebildeten Bodens mit der Antriebswelle 2 bzw. in einer alternativen Ausführungsform mit der Abtriebswelle 1.

In einer alternativen Ausführungsform ist es auch möglich, die Antriebs- und die Abtriebswelle in der Anordnung gegeneinander auszutauschen. Hierbei wird dann die Antriebswelle 2 mit dem Innenzahnrad 20 drehfest verbunden und die Abtriebswelle 1 mit dem aussenverzahnten flexiblen Ring 21 drehfest verbunden.

Das Innenzahnrad 20, dessen Zahnkreis bevorzugt kreisrund ist, kann auch einteilig mit der Abtriebswelle 1 oder als separates Bauteil ausgebildet sein, das mit der Abtriebswelle 1 durch umformtechnisches Fügen, analog dem Durchsetzfügen, oder durch Schweissen oder Löten mit der Abtriebswelle oder durch eine Reibschlüssige Verbindung verbunden werden. Das Innenzahnrad ist topfförmig ausgebildet. Ein derartiges Innenzahnrad ist dann beispielsweise durch eine Blechumformung und Stanzoperationen hergestellt und an seinem Topfboden mit der Abtriebswelle drehfest verbunden.

Zur Erfassung des Drehwinkelzustandes der Anordnung ist vorteilhafterweise ein Drehwinkelsensor 16 vorgesehen, welcher mit einem Steuergerät 128 verbunden ist, welches wiederum auf den Hilfsantrieb 6, 7 einwirkt zur Einstellung des gewünschten Drehzahlüberlagerungsverhaltens der Lenkeinrichtung. Der Sensor 16 kann hierbei Positionen des Rotors 7, der Antriebswelle 2 oder der Abtriebswelle 1 erfassen. Je nach gewähltem Steuerungsalgorithmus kann hierbei eines der Signale oder auch die Kombination der Signale verarbeitet werden.

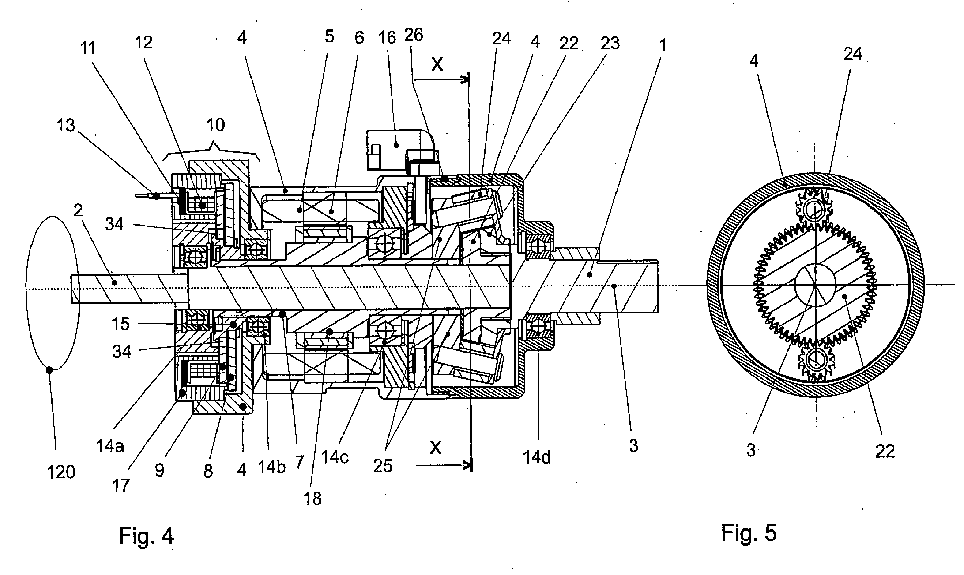

Eine weitere Drehzahlüberlagerungseinrichtung mit Sicherheitskupplung 10 ist im Längsschnitt in Figur 4 dargestellt und im Querschnitt in Figur 5.

Diese Drehzahlüberlagerungseinrichtung umfasst folgende Komponenten:
- eine Antriebseinrichtung, hier die Antriebswelle 2,
- eine Abtriebseinrichtung, hier die Abtriebswelle 1,
- ein Hilfsantrieb, umfassend einen Stator 6 mit hier nicht speziell dargestellten Statorwicklungen 5 mit entsprechendem elektrischen Anschluss und einen Rotor 7 mit hier nicht speziell dargestellten Permanentmagneten,
- einer Trägeranordnung 4, die drehfest gegenüber der Karosserie fixiert ist, vorteilhaft als Gehäuse ausgebildet, wie beispielsweise bestehend aus mindestens zwei Gehäuseteilen 4, die die Wellen 1,2 und den Rotor 7 des Hilfsantriebs in den Lagern 14c, 14d bzw. 14b, 14c lagert und den Stator 6 des Hilfsantriebs trägt, wobei diese Gehäuseteile vorzugsweise mit einem Gewinde 26 verschraubbar sind,
- einen je nach Ausführungsform einteilig mit dem Rotor 7 oder nur drehfest verbunden ausgebildeten Hilfsträger 25 der mindestens ein weiteres Zahnrad 24 trägt und welcher ein erstes Getriebeelement bildet,
- eine erste, an der Antriebswelle 2 antriebsseitig angeordnete, Zahnscheibe 22 mit Aussenverzahnung,
- eine zweite, an der Abtriebswelle 2 abtriebsseitig angeordnete, Zahnscheibe 23, mit einer weiteren Aussenverzahnung,
wobei am Rotor über ein Kopplungselement 15 das erste Kontaktelement 8 der erfindungsgemässen Veriegelungseinrichtung 10, hier als Kontaktscheibe 8 ausbildet, drehfest angeordnet ist, die Antriebs- und die Abtriebswellen 1,2 vorzugsweise in einer Achse mit einem Drehzentrum 3 angeordnet sind und die Aussenverzahntungen der beiden Zahnscheiben 22, 23 parallel zueinander, mit ihren Zahnspitzen weg vom Drehzentrum 3 der Drehzahlüberlagerungseinrichtung gerichtet und abgewinkelt zur Orthogonalen zu diesem Drehzentrum 3 ausgerichtet sind und mit der Verzahnung des zumindest einen weiteren Zahnrades 24 in Eingriff stehen. Die beiden Zahnscheiben 22, 23 sind hierbei stirnseitig, in geringem Abstand zueinander positioniert, angeordnet und ihre Verzahnungen verlaufen in gleicher Richtung zueinander ausgerichtet und fluchten miteinander im Eingriffsbereich des weiteren Zahnrades 24. Zusammen mit dem dritten Gehäuseteil 17 ist der Anschluss an die Verriegelungseinrichtung 10 dargestellt, dessen Aufbau und Funktion bereits zuvor beschrieben worden ist.

In dieser Ausführungsform besitzen die Zahnscheiben 22, 23 Verzahnungen mit unterschiedlichen Zähnezahlen und voneinander verschiedenen Teilkreisradien. Dabei ist unter Teilkreisradius der Mittelwert zwischen Radius zur Spitze der Verzahnung und dem Radius zum Fuss der Verzahnung in der Mitte der Verzahnungsbreite zu verstehen. Weiter greift jedes einzelne der weiteren Zahnräder mit seiner Verzahnung in beide Zahnscheiben 22, 23 gleichzeitig ein. Der Winkel unter dem die Verzahnungen der Zahnscheiben 22, 23 von der Orthogonalen zum Drehzentrum 3 abgewinkelt ist, beträgt bevorzugt zwischen 10 und 30°. Aus Symmetriegründen wird die Einrichtung bevorzugt mit zwei oder drei weiteren Zahnrädern 24 ausgelegt.

Die Antriebswelle 2 wird vom Steuerrad 120 in Drehung versetzt und überträgt ihre Drehung auf die erste, antriebsseitige, Zahnscheibe 22. Über die Zahnflanken der Verzahnung der weiteren Zahnräder 24 wird, die vom Steuerrad 120 in die Verzahnung der ersten, antriebsseitigen, Zahnscheibe 22 eingeleitete, Drehzahl auf die Verzahnung der zweiten, abtriebsseitigen, Zahnscheibe 23 und damit auf die Abtriebswelle 1 übertragen. Unter der Voraussetzung, dass der Hilfsträger 25 in seiner Winkellage zum drehfest zur Karosserie angeordneten Gehäuse 4 fest steht, drehen sich bei der Drehzahlübertragung von der Eingangswelle 2 auf die Ausgangswelle 1 die weiteren Zahnräder 24 um ihre eigene Achse. Mit Hilfe der Verriegelungseinrichtung 10, bei der im Bedarfsfalle der Rotor 7 über das mit ihm über ein Kopplungselement 15 verbundene Kontaktelement 8 mit der Trägeranordnung 4 blockiert wird, ist der mit dem Rotor 7 verbundene Hilfsträger 25 ebenfalls blockiert. Die Ausgangsdrehzahl an der Abtriebswelle 1 ist dann bestimmt durch die Eingangsdrehzahl an der Antriebswelle 2 multipliziert mit dem Quotienten aus der Anzahl Zähne der Verzahnung der ersten, antriebsseitigen, Zahnscheibe 22 geteilt durch die Anzahl der Zähne der Verzahnung der zweiten, abtriebsseitigen, Zahnscheibe 23.

Wird der Hilfsantrieb angetrieben, so wird die Drehzahl dessen Rotors 7 auf den Hilfsträger 25 übertragen und dabei die weiteren Zahnräder 24 in zusätzliche Rotation um ihre eigene Achse versetzt. Dadurch werden die beiden Zahnscheiben 22, 23 gegeneinander in eine Relativverdrehung, die von den Zähnezahlen dessen Verzahnungen abhängt. Mit einfachen getriebetechnischen Überlegungen kann hier ein gewünschtes Übersetzungsverhältnis von Drehzahl des Hilfsträgers 25 zur Drehzahl der Abtriebswelle, bei nicht drehender Antriebswelle, ausgelegt werden. Allerdings gestattet der Grundsätzliche Getriebeaufbau nur eine Drehzahluntersetzung, was insoweit vorteilhaft ist, weil der eingesetzte Elektromotor dadurch mit einer höheren, für Elektromotoren günstigeren Drehzahl, betrieben werden kann.

Die Zahnscheiben 22, 23 können auch als innenverzahntes Hohlzahnrad ausgebildet sein. In diesem Fall rollt dann das weitere Zahnrad an dieser Innenverzahnung ab. Die Ausführung mit aussenverzahnten Zahnscheiben und abrollen des weiteren Zahnrades 24 auf dieser Aussenverzahnung wird allerdings bevorzugt, da damit der Aufbau vereinfacht ist.

Alternativ zu in den Figuren gezeigten Ansführungen kann der Hilfsantrieb auch über einen Getriebe-, Riemen- oder Kettentrieb in die Drehzahlüberlagerungseinrichtung eingekoppelt sein. Hier kann dann sowohl der Rotor oder nur ein einziges oder natürlich auch mehrere der weiteren Zahnräder 24 in Drehung um ihre eigene Achse versetzt sein. Ebenso kann der Hilfsantrieb, anstelle der bevorzugten Ausführung als elektronisch kommutierter Elektromotor, aufgrund der karosseriefesten Anordnung seines Stators, in sehr einfacher Weise als hydraulischer oder pneumatischer Antrieb ausgebildet sein.

In dieser Ausführungsform mit besonders wenig Einzelteilen wird die Trägeranordnung als mindestens zweiteiliges Gehäuse 4 ausgelegt, wobei die beiden Gehäusehälften miteinander so verschraubt 26 sind, dass die Verzahnungen der Zahnscheiben 22, 23 und der weiteren Zahnräder 24 spielfrei aber nicht verklemmt in Eingriff gebracht sind, wodurch ein Spielausgleich während der Montage der Drehzahlüberlagerungseinrichtung erreicht ist. Die Axialpositionierung, durch entsprechendes Anziehen der Gehäuseverschraubung 26, erfolgt unter Messung der entsprechenden Winkelspiele zwischen Eingangswelle 2, Ausgangswelle 1 sowie Rotor 7 und Messung entsprechend wirkender Momente beim Verdrehen der Eingangswelle 2, Ausgangswelle 1 sowie des Rotors 7, wobei die Momente möglichst minimale Werte annehmen sollen und die Spiele vorgegebene Werte, beispielsweise 0,5 Winkelgrad nicht überschreiten sollen.

Die Anzahl der weiteren Zahnräder 24 sollte möglichst klein sein, da in jedem Zahneingriff der Verzahnungen der weiteren Zahnräder 24 in die Verzahnungen der beiden Zahnscheiben 22, 23 die Ausrichtung der Zähne der Verzahnungen zueinander korrespondieren müssen, was die möglichen Zähnezahldifferenzen und damit mögliche Übersetzungsverhältnisse der Einrichtung einschränken. So kann beispielsweise mit zwei weiteren Zahnrädern 24 die Verzahnung der ersten Zahnscheibe 22 mit 54 und die der zweiten Zahnscheibe 23 mit 56 Zähnen ausgelegt sein, was zu einer Übersetzung von Reziprokwert aus eins minus Quotient aus Anzahl Zähne erster Zahnscheibe 22 geteilt durch Anzahl Zähne zweiter Zahnscheibe 23 zu dem Ergebnis von 27 Rotorumdrehungen je Umdrehung der Abtriebswelle 2 bei nicht drehender Antriebswelle 1 führt.

Wird ein drittes weiteres Zahnrad 24 eingeführt, muss wegen der Korrespondenz die Zähnezahldifferenz 3 betragen, so dass das Übersetzungsverhältnis nun zu 18 Rotorumdrehungen je Umdrehung der Abtriebswelle 1 bei nicht drehender Antriebswelle 2 Führt. Die Zähnezahl des weiteren Zahnrades 24 ist für die Bemessung des Untersetzungsverhältnisses nicht massgebend. Allerdings müssen die Zähne modulmässig in die Zähne der beiden Zahnscheiben 22, 23 passen. Wenn mehr als ein weiteres Zahnrad 24 verwendet wird, sollten diese mit Vorteil am Rotor bzw. am Hilfsträger 25 über dessen Drehkreis gleichmässig verteilt angeordnet werden, um die einwirkenden Kräfte gleichmässig auf zu teilen. In diesem Fall muss bei der Bemessung auch dafür gesorgt werden, dass die Verzahnungen der beiden Zahnscheiben 22, 23 bei jedem der weiteren Zahnräder 24 der Eingriff mit den Zahnscheiben korrespondierend ist.

Die bevorzugte Ausführungsform der Drehzahlüberlagerungseinrichtung umfasst zusätzlich eine Drehzahl- bzw. Drehwinkelmesseichtung 16 und die erfindungsgemässe Anordnung mit einer Sicherheitskupplung 10.

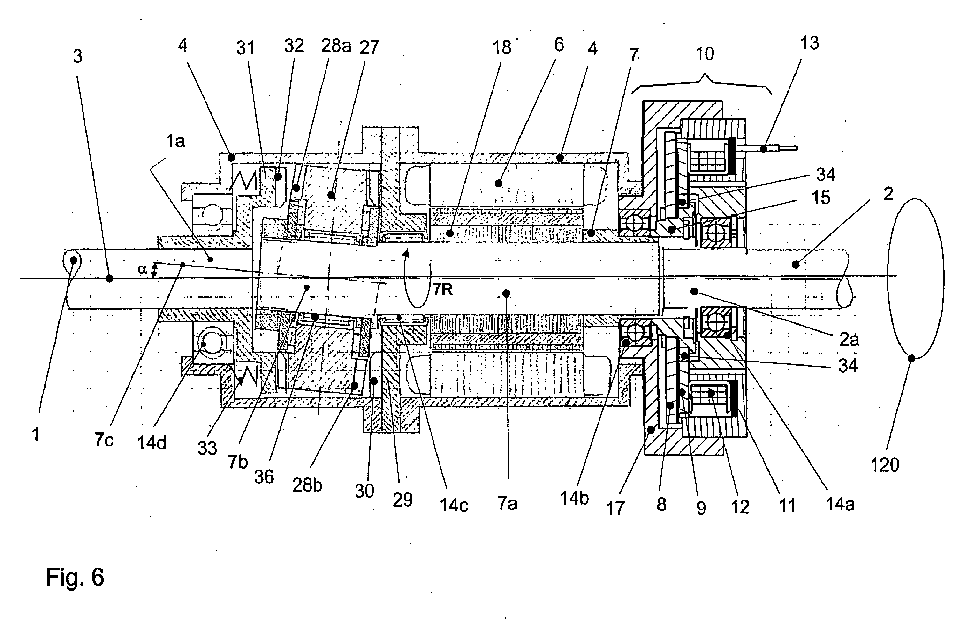

In Fig. 6 ist die erfindungsgemäβe Ausführungsform der Drehzahlüberlagerungseinrichtung im axialen Halbschnitt dargestellt. Das aus zwei Gehäusehälften bestehende Gehäuse 4 umschließt einen Hilfsantrieb, der aus einem Stator 6 und einem Rotor 7 besteht. Der Stator 6 ist mit dem Gehäuse bzw. der Gehäuseteile 4 drehfest verbunden. In das eine Gehäuseteil ragt das Wellenende 1a der Abtriebswelle 1 hinein. Auf dem Wellenende 1a ist eine Zahnscheibe 31 drehfest angeordnet. Über einen hülsenförmigen axialen Fortsatz der Zahnscheibe 31, welcher koaxial zum Wellenende 1a angeordnet ist ist die Abtriebswelle 1 zusammen mit der Zahnscheibe 31 über ein Wälzlager 14d drehbar gegenüber dem Gehäuse 4 gelagert. Die Zahnscheibe 31 weist an ihrem Umfang eine vom Wellenende 1a wegweisende und einer Taumelscheibe 27 zugewandte Verzahnung 32 auf.

Koaxial zur Abtriebswelle 1 ist eine Antriebswelle 2 angeordnet, welche verdrehfest mit dem Gehäuse 4 bzw. einer der Gehäuseteile verbunden ist. Die Gehäuseteile weisen an ihren einander zugewandten Enden sich in radialer Richtung erstreckende Flansche auf. Zwischen diesen Flanschen und mit diesen kraft- und/oder formschlüssig und/oder stoffschlüssig verbunden ist eine zweite Zahnscheibe 30 angeordnet. Die zweite Zahnscheibe 30 weist eine in Richtung auf das Wellenende 1a der Abtriebswelle 1 und zur Taumelscheibe 27 hin gerichtete Verzahnung auf. In radialer Richtung erstreckt sich die zweite Zahnscheibe 30 bis zum zylindrischen Abschnitt des Rotors 7a hin. An ihrem dem Rotor 7 zugewandten Ende weist die zweite Zahnscheibe 30 einen axialen Flansch auf. Zwischen diesem Flansch und dem zylindrischen Abschnitt des Rotors 7 ist ein Nadellager 14c angeordnet. An dem dem Wellenende 2a der Antriebswelle 2 zugewandten Ende des Rotors 7 ist ein Wälzlager 14b angeordnet. Über das Wälzlager 14b und das Nadellager 14c ist der Rotor 7 relativ zum Gehäuse 4 und relativ zur Zahnscheibe 30 drehbar gelagert.

Es ist dabei offensichtlich, dass axialer Flansch der Zahnscheibe 29 und Zahnscheibe 30 auch als separate Bauteile gefertigt und anschließend verbunden werden können.

An dem der Abtriebswelle 1 zugewandten. Ende des Rotors 7 ist ein zweiter zylindrischer Abschnitt 7b des Rotors vorhanden, welcher gegenüber dem ersten zylindrischen Abschnitt 7a um einen Winkel α abgewinkelt ist (Taumelwinkel α) und die Taumelachse 7c bildet. Auf diesem zweiten Abschnitt 7b ist eine Taumelscheibe 27a - das erste Getriebeelement der Drehzahlüberlagerungseinrichtung - angeordnet, welche zwei umlaufende Verzahnungen 28a, 28b aufweist. Durch diese Anordnung der Taumelscheibe 27a auf dem abgewinkelten Abschnitt 7b des Rotors 7 kommen die Verzahnungen 28a, 28b der Taumelscheibe 27 am Umfang an einander gegenüber liegenden Seiten mit der ersten Zahnscheibe 31 und der zweiten Zahnscheibe 30 in Eingriff. Auf diese Weise sind die Zahnscheiben 30, 31 über die Taumelscheibe 27 trieblich miteinander gekoppelt.

Mit dem Gehäuse 4 ist der Stator 6 eines Elektromotors, welcher die Drehzahlübersetzung bewirkt, drehfest verbunden. Der Elektromotor ist bevorzugt mittels Permanentmagneten 18 erregt. Der Rotor 7 des Elektromotors steuert die Taumelscheibe 27 an, die mit ihren Verzahnungen 28a, 28b die Kraftübertragung zwischen den beiden Zahnscheiben 30, 31 der Antriebswelle 2 und der Abtriebswelle 1 vermittelt. Der Zahneingriff der Taumelscheibe 27 am Umfang wechselt je nach Drehwinkel des Rotors 7.

Die Taumelscheibe 27 ist auf dem abgewinkelten Abschnitt 7b des Rotors 7 über Rollen bzw. ein Nadellager 36 drehbar gelagert. Aufgrund der Anordnung der Taumelscheibe 27 auf dem abgewinkelten Abschnitt 7b des Rotors b kommt es, wenn der Rotor b in Rotation versetzt wird, zu einer Verdrehung der Taumelscheibe 27. Wird der Rotor 7 beispielsweise in Richtung des Pfeiles 7R gedreht, so dreht sich die Taumelscheibe 27 in die gleiche Richtung. Dabei wandert der Zahneingriff zwischen der zweiten Zahnscheibe 30 und der Verzahnung 28b der Taumelscheibe 27 in Umtangsrichtung in die Zeichenebene hinein.

Die erste Zahnscheibe 31 und die zweite Zahnscheibe 30 unterscheiden sich hinsichtlich ihrer Zähnezahl voneinander. Dadurch wird erreicht, dass sich die eine Zahnscheibe aufgrund der Drehung der Taumelscheibe 27 schneller dreht als die andere Zahnscheibe, sodass die für derartige Taumelgetriebe typischen hohen Übersetzungsverhältnisse erreicht werden.

Zum Spielausgleich kann in die Vorrichtung die Druckfeder 33 integriert sein, die die beiden Zahnscheiben 30, 31 und die Taumelscheibe zusammendrücken.

An dem der Antriebswelle 2 zugewandten Ende des Rotors 7 ist ein Kopplungselement 15 befestigt, das die erste Kontaktscheibe 8 trägt. Zusammen mit dem dritten Gehäuseteil 17 ist der Anschluss an die Verriegelungseinrichtung 10 dargestellt, dessen Aufbau und Funktion oben dargestellt ist.

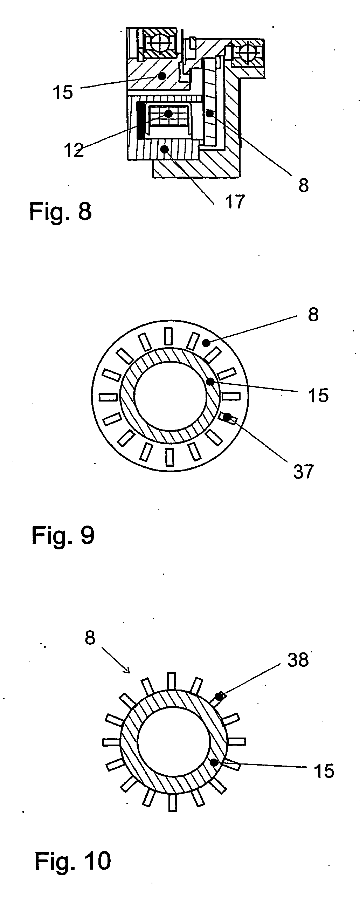

In der Figur 8 ist eine alternative Ausführung für die Sicherheitskupplung dargestellt, bei der die Kontaktscheibe 8 direkt mit dem als Joch ausgeführten Teilgehäuse 17 in Kontakt gebracht wird. Das zweite Kontaktelement bzw. die zweite Kontaktscheibe ist hier als Bestandteil des Teilgehäuses 17 anzusehen.

Die Kontaktscheibe 8 kann in allen Ausführungsformen als zylindrische Scheibe ausgelegt sein. Zur besseren Entlüftung beim Schliessen der beiden Kontaktflächen ist es jedoch von Vorteil, die Kontaktscheibe 8 mit entsprechenden Aussparungen 37 auszulegen (vgl. Figur 9). Alternativ können auch eine Anzahl von Kontaktelementen 38 (vgl. Figur 10) direkt mit dem Kopplungselement 15 verbunden sein. Die Form der Aussparungen 37 bzw. Kontaktelemente 38 der Kontaktscheibe 8 sind den jeweiligen konstruktiven Gegebenheiten anzupassen. Wichtig ist, dass eine genügende magnetische Anziehungskraft zum zweiten Kontaktelement 9, wie beispielsweise die zweite Kontaktscheibe 9 oder das Teilgehäuse 17, das an seiner zur Kontaktscheibe 8 hin gerichteten Oberfläche selbst einen entsprechenden Reibbelag aufweisen kann, erreicht ist.

Auch wenn in allen Ausführungsformen Wälzlager gezeigt sind, ist es denkbar und möglich, Gleitlager einzusetzen. Während im Allgemeinen mit Wälzlagern geringere Reibwerte erzielt werden, sind Gleitlager kostengünstiger und benötigen weniger Bauraum. Die Entscheidung wird je nach den Erfordernissen an Bauraum und Energieeinsatz für den Hilfsantrieb getroffen.

Die so vorgestellte Drehzahlüberlagerungseinrichtung wird in Fahrzeuglenksystemen in der Weise betrieben, dass im Falle eines Ausfalls der Energieversorgung des Hilfsantriebes oder einer anderen Störung der Funktionen des Fahrzeuges der Stromfluss zum Betreiben des Gegenmagnetfeldes zum Aufheben der magnetischen Anpresskraft unterbrochen wird, so dass die erste Kontaktscheibe (8) mit der zweiten Kontaktscheibe (9) mit der magnetisch erzeugten Anpresskraft in reibschlüssigen Kontakt stehen. dadurch wird unmittelbar eine drehfeste Kopplung zwischen der Antriebswelle 2 und der Abtriebswelle 1 erzielt.

Es ist in diesem Falle wünschenswert, die Kopplung innerhalb möglichst kurzer Zeit und für den Fahrer möglichst unmerklich herzustellen. Als Fehlerfall ist neben dem Energieausfall der Energieversorgung des Hilfsantriebes oder im Fahrzeug auch ein Sensorausfall, ein Problem mit der AnSteuerung oder ein Softwarefehler oder sonstiger Fehler denkbar. So kann beispielsweise durch einen einfachen Kabelbruch, der Messwert der Geschwindigkeit des Fahrzeuges nicht mehr korrekt an die Steuerung der Überlagerungsregelung übertragen werden. Damit kann die Steuerung nicht mehr entscheiden, mit welcher Drehzahlüberlagerung die Einrichtung betrieben werden soll. In einem derartigen Fall, der leicht erkennbar ist, steht genügend Energie zur Verfügung, die drehfeste Kopplung zwischen Abtriebswelle 1 und Antriebswelle 2 aktiv zur erreichen.

In einer bevorzugten Weiterführung der Erfindung wird die Spule für das Gegenmagnetfeld, mit dem das Magnetfeld des Permanentmagneten 11, das die Verriegelungseinrichtung 10 zur wahlweisen drehfesten Kopplung zwischen Abtriebswelle 1 und Antriebswelle 2 bewirkt, aufgehoben wird, zumindest zeitweise so geschaltet, dass die magnetische Anpresskraft zwischen den beiden Kontaktscheiben 8, 9 erhöht ist. Dadurch wird ein beschleunigtes Schliessen der Verriegelungseinrichtung bewirkt. Nach dem die drehfeste Kopplung der Abtriebswelle 1 und der Antriebswelle 2 erreicht ist, kann die Bestromung der Spule 12 für das Gegenmagnetfeld abgeschaltet werden.

In allen gezeigten Ausführungsformen der Drehzahlüberlagerungseinrichtung kann auch die Abtriebswelle 1 mit der Antriebswelle 2 vertauscht sein.

Es sind auch andere Getriebeanordnungen, wie beispielsweise Planetengetriebe möglich für die Anwendung in Lenkanordnungen in Kombination mit der zuvor dargestellten Sicherheitskupplungsanordnung.

## Patentansprüche

1. Drehzahlüberlagerungseinrichtung für ein Fahrzeuglenksystem mit einer Abtriebswelle (1) mit einem Wellen-ende (1a), die zur Antriebswelle (2) in deren Achsrichtung ausgerichtet ist, einer Trägeranordnung (4), welche die Abtriebswelle (1) und die Antriebswelle (2) mindestens teilweise gelagert drehbar positioniert, einem Hilfsantrieb (5, 6, 7) mit einem Rotor (7), der mit einem ersten Getriebeelement (19, 25, 27) drehfest verbunden ist und eine einstellbare Verriegelungseinrichtung (10) zur wahlweisen drehfesten Kopplung zwischen Abtriebswelle (1) und Antriebswelle (2), wobei die Trägeranordnung (4) karosseriefest angeordnet ist, der Rotor des Hilfsantriebes (5, 6, 7) koaxial die Abtriebswelle (1) und/oder Antriebswelle (2) umschliesst, das erste Getriebeelement (19, 25, 27) mit einer Drehzahlübersetzung kleiner 1 die Drehzahl des Rotors (7) auf die Drehzahl der Abtriebswelle (1) überträgt, und der Rotor (7) mit einem konzentrisch die Achsrichtung der Abtriebswelle (1) und Antriebswelle (2) umschliessenden ferromagnetischen oder permanentmagnetischen ersten Kontaktelement (8) drehfest verbunden ist, wobei die wahlweise drehfeste Kopplung zwischen Abtriebswelle (1) und Antriebswelle (2) durch einen Reibschluss des ersten Kontaktelementes (8) mit einem zweiten Kontaktelement (9), das drehfest mit der Trägeranordnung (4) verbunden ist, ausgebildet ist und die für die Reibkraft erforderliche Anpresskraft eine magnetische Kraft ist und wobei zumindest eines der beiden Kontaktelemente (8, 9) in Achsrichtung verschieblich ist, **dadurch gekennzeichnet, dass** die Verriegelungseinrichtung (10)als von dem ersten Getriebeelement (19, 25, 27) und dem Hilfsantrieb (5, 6, 7) separate, kompakte Baueinheit in einem Teilgehäuse (17) angeordnet, ausgebildet ist, wobei der Hilfsantrieb (5, 6, 7) zwischen dem erste Getriebeelement (19, 25, 27) und der Verriegelungseinrichtung (10) angeordnet ist, derart dass die Verriegelungseinrichtung (10) auf der Seite der Antriebswelle (2) liegt, und dass zwischen dem Rotor (7) und dem ersten Kontaktelement (8) ein Kopplungselement (15) angeordnet ist und dieses als drehfeste Kopplung ausgebildet ist, wobei:
- das Wellenende (1a) der Abtriebswelle (1) eine mit dieser drehfest verbundene erste Zahnscheibe (31) trägt,
- die Trägeranordnung (4)eine drehfest mit dieser verbundene zweite Zahnscheibe (30) trägt,
- der Rotor (7) einen ersten zylindrischen Abschnitt (7a) aufweist und einen daran anschliessenden zweiten zylindrische Abschnitt (7b), welcher der Abtriebswelle (1) zugewandt ist und dieser gegenüber dem ersten Abschnitt um einen Winkel(α) abgewinkelt ist und den Taumelwinkel bildet,
- und wobei auf dem abgewinkelten zweiten Abschnitt (7b) eine auf diesem gelagerte Taumelscheibe (27) angeordnet ist mit daran beidseitig angeordneten Verzahnungen (28a, 28b), welche zwischen den beiden Zahnscheiben (30, 31) liegt und die beiden Zahnscheiben (30, 31) miteinander über den Zahneingriff trieblich koppelt, derart dass ein Taumelscheibengetriebe ausgebildet ist.

2. Drehzahlüberlagerungseinrichtung für ein Fahrzeuglenksystem nach Anspruch 1, **dadurch gekennzeichnet, dass** die magnetische Anpresskraft zwischen dem ersten und zweiten Kontaktelement durch ein elektrisch angesteuertes Gegenmagnetfeld aufhebbar ist und dass vorzugsweise mindestens eines der Kontaktelemente 8, 9 scheibenförmig, und/oder konusförmig ausgebildet ist.

3. Drehzahlüberlagerungseinrichtung für ein Fahrzeuglenksystem nach Anspruch 1 oder 2, **dadurch gekennzeichnet, dass** die Verriegelungseinrichtung eine Feder (34) umfasst, deren Kraft entgegen der magnetischen Anpresskraft wirkt.

4. Drehzahlüberlagerungseinrichtung für ein Fahrzeuglenksystem nach Anspruch 3, **dadurch gekennzeichnet, dass** die Federkraft so bemessen ist, dass auf das erste axial bewegliche Kontaktelement (8) von dem anderen Kontaktelement (9) weg gerichtet wirkende Kraft im vom ersten Kontaktelement abgehobenen Zustand im Bereich von etwas grösser als Null bis 10% des Betrages der magnetischen Kraft des Magnetfeldes, das die Anpresskraft erzeugt, liegt.

5. Drehzahlüberlagerungseinrichtung für ein Fahrzeuglenksystem nach einem der vorhergehenden Ansprüchen, **dadurch gekennzeichnet, dass** der Rotor (7) einerseits direkt in der Trägeranordnung (4) drehbar gelagert ist, dass die Antriebswelle (2) in der Abtriebswelle (1) und in dem fest mit der Trägeranordnung verbundenen Teil der Verriegelungseinrichtung (10), das das zweite Kontaktelement umfasst, drehbar gelagert ist.

6. Drehzahlüberlagerungseinrichtung für Fahrzeuglenksystem nach einem der vorhergehenden Ansprüche, **dadurch gekennzeichnet, dass** der Hilfsantrieb (5, 6, 7) ein Elektromotor ist, dessen Stator (6) fest mit der Trägeranordnung (4) verbunden ist.

7. Drehzahlüberlagerungseinrichtung für ein Fahrzeuglenksystem nach Anspruch 6, **dadurch gekennzeichnet, dass** der Stator (6) die Achse (3) der Antriebswelle (2) und/oder Abtriebswelle (1) koaxial umschliesst.

8. Drehzahlüberlagerungseinrichtung für ein Fahrzeuglenksystem nach einem der vorhergehenden Ansprüche, **dadurch gekennzeichnet, dass** die Antriebs- und die Abtriebsfunktion der Abtriebswelle (1) und der Antriebswelle (2) vertauscht ist.

## Claims

1. Rotation speed superimposition device for a vehicle steering system with an output shaft (1) with a shaft end (1a) oriented to the drive shaft (2) in its axial direction, a carrier arrangement (4) which positions the output shaft (1) and drive shaft (2) mounted at least partially rotatably, an auxiliary drive (5, 6, 7) with a rotor (7) connected rotationally fixed with the first gear element (19, 25, 27) and an adjustable locking device (10) for optional rotationally fixed coupling between output shaft (1) and drive shaft (2), wherein the carrier arrangement (4) is arranged fixed on the bodywork, the rotor of the auxiliary drive (5, 6, 7) surrounds the output shaft (1) and/or drive shaft (2) coaxially, the first gear element (19, 25, 27) transmits the rotation speed of the rotor (7) to the rotation speed of the output shaft (1) with a speed translation of less than 1, and the rotor (7) is connected rotationally fixed with a ferromagnetic or permanent-magnetic first contact element (8) concentrically surrounding the axial direction of the output shaft (1) and drive shaft (2), wherein the optional rotationally fixed coupling between the output shaft (1) and drive shaft (2) is formed by a friction connection of the first contact element (8) with a second contact element (9) which is connected rotationally fixed with the carrier arrangement (4), and the contact force necessary for the friction force is a magnetic force, and wherein at least one of the two contact elements (8, 9) is displaceable in the axial direction, **characterised in that** the locking device (10) is formed as a compact assembly separate from the first gear element (19, 25, 27) and the auxiliary drive (5, 6, 7) and arranged in a part housing (17), wherein the auxiliary drive (5, 6, 7) is arranged between the first gear element (19, 25, 27) and the locking device (10) such that the locking device (10) lies on the side of the drive shaft (2), and that between the rotor (7) and the first contact element (8) is arranged a coupling element (15) which is formed as a rotationally fixed coupling, wherein:
- the shaft end (1a) of the output shaft (1) carries a first toothed disc (31) connected rotationally fixed therewith,
- the carrier arrangement (2) carries a second toothed disc (30) connected rotationally fixed therewith,
- the rotor (7) comprises a first cylindrical portion (7a) and a second cylindrical portion (7b) adjacent thereto which faces the output shaft (1) and is angled in relation to the first portion by an angle (α) and forms the wobble angle,
- and wherein on the angled second portion (7b) is arranged a wobble plate (27) which is mounted thereon and has toothings (28a, 28b) arranged on both sides and lies between the two toothed discs (30, 31) and couples the two toothed discs (30, 31) together in a driving fashion via the tooth engagement so as to form a wobble plate gear mechanism.

2. Rotation speed superimposition device for a vehicle steering system according to claim 1, **characterised in that** the magnetic contact force between the first and second contact elements can be eliminated by an electrically controlled counter-magnetic force and that preferably at least one of the contact elements (8, 9) is formed disc-like and/or conical.

3. Rotation speed superimposition device for a vehicle steering system according to claim 1 or 2, **characterised in that** the locking device comprises a spring (34), the force of which counters the magnetic contact force.

4. Rotation speed superimposition device for a vehicle steering system according to claim 3, **characterised in that** the spring force is dimensioned such that force acting on the first axially mobile contact element (8) and directed away from the other contact element (9), in the state lifted from the first contact element, lies in the range of slightly greater than zero to 10% of the amount of the magnetic force of the contact field which generates the contact force.

5. Rotation speed superimposition device for a vehicle steering system according to any of the preceding claims, **characterised in that** the rotor (7) firstly is mounted rotatably directly in the carrier arrangement (4), that the drive shaft (2) is mounted rotatably in the output shaft (1) and in the part of the locking device (10) which is fixedly connected with the carrier arrangement and comprises the second contact element.

6. Rotation speed superimposition device for a vehicle steering system according to any of the preceding claims, **characterised in that** the auxiliary drive (5, 6, 7) is an electric motor, the stator (6) of which is fixedly connected with the carrier arrangement (4).

7. Rotation speed superimposition device for a vehicle steering system according to claim 6, **characterised in that** the stator (6) coaxially surrounds the axis (3) of the drive shaft (2) and/or output shaft (1).

8. Rotation speed superimposition device for a vehicle steering system according to any of the preceding claims, **characterised in that** the drive and output functions of the output shaft (1) and drive shaft (2) are exchanged.

## Revendications

1. Dispositif de superposition de vitesses de rotation, pour système de direction de véhicule, comprenant un arbre de sortie (1) comportant une extrémité (1a) d'arbre et orienté dans la direction axiale de l'arbre d'entrée (2), une structure porteuse (4) sur laquelle l'arbre de sortie (1) et l'arbre d'entrée (2) sont positionnés au moins en partie logés sur paliers en rotation libre, un servomoteur (5, 6, 7) comprenant un rotor (7) connecté sans rotation possible à un premier élément de transmission (19, 25, 27), et un mécanisme de verrouillage réglable (10) pour accoupler à volonté sans rotation possible l'arbre de sortie (1) et l'arbre d'entrée (2), où la structure porteuse (4) est montée fixement sur la carrosserie, le rotor du servomoteur (5, 6, 7) entoure coaxialement l'arbre de sortie (1) et/ou l'arbre d'entrée (2), le premier élément de transmission (19, 25, 27) communique à l'arbre de sortie (1) une vitesse de rotation selon un rapport de vitesses de rotation inférieur à 1 par rapport à la vitesse de rotation du rotor (7), et le rotor (7) est connecté sans rotation possible avec un premier élément de contact (8) ferromagnétique ou à aimant permanent qui entoure de façon concentrique la direction axiale de l'arbre de sortie (1) et de l'arbre d'entrée (2), où l'accouplement à volonté sans rotation possible de l'arbre de sortie (1) et de l'arbre d'entrée (2) consiste en une fermeture à friction du premier élément de contact (8) avec un deuxième élément de contact (9) connecté sans rotation possible avec la structure porteuse (4) et la force de pression nécessaire pour la force de friction est une force magnétique, et où au moins l'un des deux éléments de contact (8, 9) peut coulisser en direction axiale, **caractérisé en ce que** le mécanisme de verrouillage (10) consiste en un composant compact, disposé dans un boîtier partiel (17) et séparé du premier élément de transmission (19, 25, 27) et du servomoteur (5, 6, 7), le servomoteur (5, 6, 7) étant disposé entre le premier élément de transmission (19, 25, 27) et le mécanisme de verrouillage (10) d'une manière telle que le mécanisme de verrouillage (10) est placé sur le côté arbre d'entrée (2) et qu'un élément d'accouplement (15) consistant en un accouplement sans rotation possible est disposé entre le rotor (7) et le premier élément de contact (8), où
- l'extrémité (1a) d'arbre de l'arbre de sortie (1) porte une première roue dentée (31) qui lui est connectée sans rotation possible,
- la structure porteuse (4) porte une deuxième roue dentée (30) qui lui est connectée sans rotation possible,
- le rotor (7) comporte un premier segment cylindrique (7a) et un deuxième segment cylindrique (7b) qui s'y raccorde, est tourné vers l'arbre de sortie (1) et incliné d'un angle (α) par rapport au premier segment et forme avec lui l'angle de nutation,
- et où le deuxième segment incliné (7b) porte un disque en nutation (27) qui y est logé à palier et porte sur chacun de ses deux côtés une denture (28a, 28b) et qui est placé entre les deux roues dentées (30, 31) et accouple les deux roues dentées (30, 31) l'une à l'autre par l'engrènement des dents pour assurer la transmission, de manière à constituer une transmission à disque de nutation.

2. Dispositif de superposition de vitesses de rotation pour système de direction de véhicule selon la revendication 1, **caractérisé en ce que** la force de pression magnétique entre le premier et le deuxième éléments de contact peut être accrue par un champ magnétique commandé électriquement et **en ce que** de préférence au moins l'un des éléments de contact (8, 9) est de structure discoïdale et/ou conique.

3. Dispositif de superposition de vitesses de rotation pour système de direction de véhicule selon la revendication 1 ou 2, **caractérisé en ce que** le mécanisme de verrouillage comprend un ressort (34) dont la force s'exerce en opposition à la force de pression magnétique.

4. Dispositif de superposition de vitesses de rotation pour système de direction de véhicule selon la revendication 3, **caractérisé en ce que** l'ampleur de la force élastique est telle qu'une force exercée sur le premier élément de contact (8), mobile axialement, dans la direction opposée à l'autre élément de contact (9) dans l'état éloigné du premier élément de contact est comprise dans la plage d'un peu plus de zéro à 10% de l'ampleur de la force magnétique du champ magnétique qui génère la force de pression.

5. Dispositif de superposition de vitesses de rotation pour système de direction de véhicule selon l'une quelconque des revendications précédentes, **caractérisé en ce que** le rotor (7) est directement loge à rotation sur l'un de ses côtés dans la structure porteuse (4) et **en ce que** l'arbre d'entrée (2) est logé à paliers en rotation libre dans l'arbre de sortie (1) et dans la partie du mécanisme de verrouillage (10) qui est connectée fixement à la structure porteuse et entoure le deuxième élément de contact.

6. Dispositif de superposition de vitesses de rotation pour système de direction de véhicule selon l'une quelconque des revendications précédentes, **caractérisé en ce que** le servomoteur (5, 6, 7) est un moteur électrique dont le stator (6) est connecté fixement à la structure porteuse (4).

7. Dispositif de superposition de vitesses de rotation pour système de direction de véhicule selon la revendication 6, **caractérisé en ce que** le stator (6) entoure coaxialement l'axe (3) de l'arbre d'entrée (2) et/ou de l'arbre de sortie (1).

8. Dispositif de superposition de vitesses de rotation pour système de direction de véhicule selon l'une quelconque des revendications précédentes, **caractérisé en ce que** les fonctions respectives d'entrée et de sortie de l'arbre d'entrée (2) et de l'arbre de sortie (1) sont échangées.
